# EUROPEAN PATENT SPECIFICATION

(11) **EP 2 096 889 B1**
(45) Date of publication and mention of the grant of the patent: **17.09.2014**
(21) Application number: 09152930.5
(22) Date of filing: 16.02.2009
(51) Int. Cl.: H04W 24/08, H04W 16/18

(54) **Cellular drive test system network**
Zelluläres Laufwerkstestsystemnetz
Réseau de systèmes de test d'entraînement cellulaire

(30) Priority: 27.02.2008 US 38437
(43) Date of publication of application: 02.09.2009
(73) Proprietor: PC-Tel, Inc., Bloomingdale, IL 60108 (US)
(72) Inventor: Dickey, Sergey L., Lovettsville, VA Virginia 20180 (US); Sripadham, Shankar, Reston, VA Virginia 20194 (US)
(74) Representative: Fenlon, Christine Lesley

(56) References cited:
- US-A- 6 041 236
- US-A1- 2004 143 428
- US-A1- 2005 002 473
- US-A1- 2005 180 351
- US-A1- 2005 251 363
- US-A1- 2006 079 222

## Description

### Field of the Invention

The field of the invention relates to cellular communication systems and more particularly to methods of measuring interference in cellular communication systems.

### Background of the Invention

Cellular communication systems are generally known. Such systems rely upon a number of base stations distributed throughout a region of service. In order to obtain service, a portable cellular unit scans a frequency spectrum for a control channel of the nearest base station to request service. The base station may detect the request for service, authenticate the user as authorized to receive the service and allocate a channel for the benefit of the user.

Because of the limited spectrum available for cellular service, a communication system must re-use communication channels under some channel re-use plan. In order to reduce interference, the re-use plan is typically based upon some degree of physical separation between re-using base stations.

In order to ensure the effectiveness of a frequency re-use plan, system operators typically rely upon the use of portable scanning devices that measure signals emitted by the base stations. The portable scanning devices are typically mounted to vehicles and are referred to as drive test systems.

Drive test systems typically collect massive amounts of data. In most cases, a set of channels of an operating spectrum is scanned at some scanning rate while the scanning device collects samples from each channel. Because of the number of channels and need to sample each channel above a Nyquist rate for the channel, very few scanning devices have the capacity to do anything more than rudimentary processing of the raw data at the same time that the scanning device collects data. Rudimentary processing may simply mean comparing the signal data with a threshold value and if the signal level does not exceed a threshold value then discarding the samples.

In order to process collected data, drive test systems either offload collected data to other computers to process the data or the drive test system itself processes the data offline when it is not otherwise collecting data. The collected data on each channel are processed, first to measure a relative strength of the signal and second to identify a base station transmitting the signal detected on the channel.

While existing drive test systems work relatively well, they often fail to collect a full complement of signals on all channels. On the one hand, a first drive test system may detect a signal on a channel while a second drive test system operating in the same area may not detect the signal because some condition has caused the measured signal to decrease below the required threshold level. As a result, when the data from the first and second drive test systems are later processed offline, the data may be incomplete. Because of the importance of frequency reuse, a need exists for better methods of processing signals within drive test systems

US2005/0180351 and US2006/0079222 disclose some known drive test systems. For example, US2005/0180351 teaches real-time acquisition and analysis of signals as well as off-line data analysis operations. However, US2005/0180351 does not teach any near real time processing.

US2006/0079222 teaches near real time processing. However, US2006/0079222 only teaches a cellular communications drive test system that captures call performance information from a switch in near real time. No known drive test system, including US2005/0180351 and US2006/0079222, teaches near real time processing that retrieves raw signal samples that were stored in real time processing, that retrieves new entries in a target list that was updated by real time processing, and that reprocesses the raw signal samples, using the new entries in the target list, to identify received signals that were not identified by the real time processing. Therefore, improved systems and methods are needed.

### Summary

The present invention is defined in the attached claims.

### Brief Description of the Drawings

FIG. 1 is a diagram of a drive test system shown generally in accordance with an illustrated embodiment of the invention and in the context of a cellular communication system;
FIG. 2 is a signal collection system of a drive test unit of the drive test system of FIG. 1;
FIG. 3 is a schematic of real time, near real time and offline processing hardware and/or software used by the drive test system of FIG. 1;
FIG. 4 is a flow chart of the signal tracking process within the system of FIG. 1;
FIG. 5 is a flow chart of real time and near real time processing modes used by the drive test units of FIG. 1;
FIG. 6 depicts an example of differences of results provided by the drive test units of FIG. 1;
FIG. 7 depicts a flow chart of inter drive test communication used by the system of FIG. 1; and
FIG. 8 depicts a further flow chart of communication among the drive test units of FIG. 1.

### Detailed Description of an Illustrated Embodiment

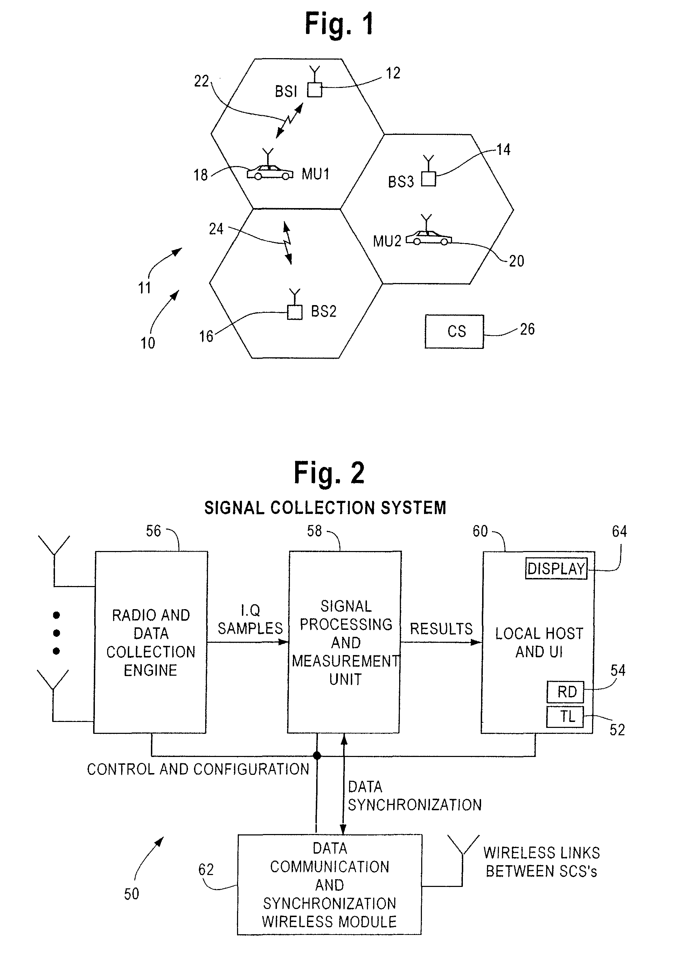

FIG. 1 is a cellular communication system 10. Shown within the cellular communication system is a drive test system 11 shown generally in accordance with an illustrated embodiment of the invention.

The drive test system 11 is used for determining cellular network coverage and interference measurements and optimization. In the majority of cases, drive test systems 11 include data-collection equipment such as test handsets and/or RF scanners, and a laptop computer running a control program that allows its user, for example an RF engineer or technician, to monitor results in real time and interact with the process. The immediate interaction allows the operator to perform troubleshooting and reconfiguration of the system 11, and to set the measurement system 11 up for collecting the most relevant information depending on observed signal and interference data. Interactivity is a valuable attribute of drive-test systems.

Another desirable property of the system 11 is the ability to present to the operator the most up to date and complete information about the network 10 and signal parameters based on prior configuration data and previously collected measurement data.

Both of the above characteristics are also important when the scanning receiver is integrated by a third party (an OEM drive-test tool manufacturer) into their tool, and the tool is controlled by a laptop running OEM proprietary software.

Unfortunately, a number of factors make the above characteristics difficult to attain. First of all, while older-model scanning receivers produce all output data using only currently available signal parameters, in virtually real time, a more efficient processing approach benefits from the knowledge of signals yet to be acquired. Such an approach necessitates that the results be delayed by varying lengths of time, sometimes on the order of many hours. One example is a prior drive-test system [references] that employs statistical processing of the ensemble of measurements over a wide area comprising multiple drive routes. In the process, the prior use of the system extracts important information about signal parameters for various transmitters in the area and stores this information in the so-called "sector association data base" (SADB). This can be considered posterior information that is used to make individual signal detections more reliable. In other words, instead of relying on unconditional probabilities of signal detection and of false alarm, the method augments these, in a Bayesian approach, by the observed, often at different times and places, parameters of signals; thusly the method uses conditional probabilities for signal detection, which allow lower decision thresholds when the signal detection window matches expected signal parameters.

The downside to this method is that it requires making signal parameter estimations before attempting to detect the majority of signal occurrences, causing a significant delay in delivering output data to the operator. In addition, some of the data cannot even become available for processing for hours if data collection is performed by several drive-testing teams concurrently, and data are stored on different machines.

An example of not using the most up to date data is when scanners use only real-time data processing, sometimes assisted by a database of previously found sectors in the vicinity, which we will call the "target list", or TL for brevity. A TL is a list of signals that were detected in a sliding time window immediately preceding the current time of data collection. With a TL, although one achieves a real-time availability of the processed measurement data, these data are not as complete as they could be if the full knowledge of signal parameters in the area were known at the time of signal collection. For instance, even if the TL is implemented, it assists in detection of signals that are collected subsequent to the first successful detection of the signal from a given sector. Any presumably measurable signals preceding this first detection will not be included in the determined solution.

In the case of a scanner being part of an integrated OEM system, the limitation comes from the inability of the scanner subsystem to share part of the laptop signalprocessing and especially storage capacities for effecting a more complete form of processing based on storing, at least temporarily, raw or preprocessed signal samples prior to detection, where detection may be a threshold based decision about the presence of the signal in the sample. The reason for this limitation is that the OEMs of prior art drive test systems have stringent requirements for processing and storage on the PC laptop they use for running their software that make sharing the laptop between their software and signal-detection algorithms undesirable or unacceptable. This circumstance has serious practical implications concerning use of posterior information by OEM customers.

Plainly, there is a need for a drive test system architecture that attains the benefits of near real time interactivity and completeness of the measurement results, including an architecture where the near real time interactivity and completeness is integrated into OEM systems. Such architecture should also provide simplified workflow for users where most of the tedious processes of data management and system configuration are automated even in the situation when using multiple drive-testing teams for market surveys.

Unique features of the test drive system 11 of FIG. 1 address these and other problems. In general, the unique features are provided through the use of one or more mobile drive test units 18, 20, by themselves or by the use of the mobile test drive units 18, 20 and a centralized server 26.

As an initial overview, the test drive units 18, 20 operate by sharing information among the internal processes inside each of the test drive unit, as well as among the test drive units 18, 20 either directly or via a wireless network; they may also share information with the centralized server 26. The shared information may include a target list (TL) 52 of channel information by itself, SADB, or the TL 52 along with sample information (i.e., raw data including I,Q samples).

The TL 52 includes a number of parameters of signals. The ultimate goal of the TL 52 is to enable the drive test units 18, 20 to identify signals from a base station 12, 14, 16 so that their signal strengths may be measured. As such, the content of the TL 52 is dependent upon the type of base station involved. For example, if the base station 12, 14, 16 is spread spectrum, then the TL 52 may include a scrambling code number for each channel along with a base station ID that may be retrieved through use of the scrambling code. If the base station 12, 14, 16 is GSM, then the TL 52 may include at least a channel number, a BSIC, a cell ID and the timing of the multiframe.

The TL 52 is shared among test drive units 18, 20 to enable any two or more test drive units 18, 20 operating in the same vicinity to have a relatively complete picture of communication system activity in the area even though one or both units 18, 20 may not be able to easily detect all of the signals. By having substantially identical TLs 52, the test drive units 18, 20 are able to do further processing of the raw data so as to detect any signals that may not exceed some minimum threshold level.

The test drive units 18, 20 may process data under three different modes. The three different modes are real time, near real time and offline modes. The real time, near real time and offline modes are tightly coupled, and the results of each mode may be used by a different mode to further refine the search results. The real time mode may be defined as a first process in which a signal sample is decoded, and its level is measured, with assistance from the knowledge of the decoded signal instances over an interval of a relatively short duration that immediately preceded the detection time of the given sample, which interval may include the collection moment itself. More specifically, implementation is based on two processes, Acquisition and Tracking, linked through the target list. Whereas acquisition operates without any prior information about the signal parameters and thusly searches the whole signal space in order to find the signal, tracking benefits from the information delivered by acquisition and stored in the TL. However, the life span of the information in the TL is relatively short, and it defines the interval of accumulating signal knowledge referred to in the definition above. The use of known signal parameters, such as its time-of-arrival, facilitates decoding by allowing the process to limit the search to a small subspace of the total signal space, which makes the search faster, more reliable, and lowers the detection threshold. And the limited computational power of the receiver is exactly the raison d'être of this application: if one had unlimited computational power, there would be no need to have multiple layers of processing.

The Near Real Time mode is similar to the Real Time Mode, but the position of the interval is reversed. The near real time mode may be defined as a second process in which a signal sample is decoded, and its level is measured, with the assistance from the knowledge of the decoded instances of the signal over an interval of relatively short duration that immediately follows the collection time of the given sample. In order to overcome an apparent non-causality of relying on the future to decode the past (i.e., history-in-reverse), the signal samples are stored in the memory until a decodable sample has been found by acquisition. If nothing can be found during the TL life span, all samples are discarded without decoding.

The Offline mode may be defined as a process in which a signal sample's decoding is assisted by the unlimited set of signal instances acquired at any time during the drive campaign, before and after the collection of this given sample. For practical purposes, especially from the point of view of low latency of the result, it is preferable to use only a short acquisition interval in the future, referenced to the collection moment, but there is no hard limit. The implementation is described as follows. The Drive Test System uses all of the collected samples from all drives currently available on the Drive Test System, to create a table of sector transmission parameters (SADB) for all of the sectors whose signals were detected in the general drive test area.

Under the first, real time mode, the drive test units 18, 20 may collect signal samples, detect and decode signals under a stringent set of time limits. Decoding signals means determining a source identifier of the signal (e.g., a base station identifier).

A rolling (most recent) set of samples are saved in a short-term memory (e.g., a circular buffer) for an appropriate time interval (e.g., 2 minutes, 5 minutes, etc.). A much larger sample (e.g., a full complement of data collected by a drive test unit 18, 20) may be saved in a bulk storage 86.

In the real time mode, the test drive units 18, 20 may scan a signal space (e.g., a spectrum) used by the base stations 12, 14, 16 for detectable signals. Each time a signal is detected, the test drive unit 18, 20 attempts to decode the signal and measure its strength.

In GSM, for example, the test drive unit 18, 20 may acquire signals by scanning the spectrum and looking for known bursts (e.g., frequency correction channel (FCCH) bursts, synchronization channel (SCH) bursts, etc.). Since FCCH and SCH have a known sequence of bits, the test drive units 18, 20 will attempt to correlate the acquired bursts of the detected signal to the known sequences to determine a power level.

The test drive units 18, 20 may also decode the SCH to retrieve BSIC information. If the detected signal is of sufficient quality, the test drive units 18, 20 may also decode any layer 3 information to determine a cell ID.

During acquisition, the decoded information may be compared with the TL 52 to determine if the detected signal can be matched to any of the sets of entries within the TL 52. Whenever a detected signal cannot be matched to an entry or set of entries within the TL 52, the detected signal is adjudged to be a new signal.

As new signals are detected, they are sent to a second, near real-time process. The second, near real time process is tightly coupled to the first process in that the output of the first process is used as an input to the second process. For example, if a new signal cannot be decoded or can only be partially decoded, then the second process may use the partially decoded signal parameters or raw unprocessed stored signal samples to perform further decoding, using the new information in the TL 52. The second near real time process functions to reprocess the signal data from within a most recent few minutes that has been previously saved within the short term memory

Periodically or intermittently, the test drive units 18, 20 may attempt to communicate with each other. This may mean periodically transmitting a short identification burst. If the test drive units 18, 20 are able to detect one another, the test drive units 18, 20 may set up a broadband communication channel between one another and exchange the TL 52, or the SADB and TL 52, as well as any kind of signal related data base in the case where the TL and SADB have been merged, and raw data has been collected over some time interval.

If the test drive units 18, 20 are not able to contact each other directly, then the test drive units will attempt to communicate using any available wireless network, such as WiFi, GSM, UMTS, EV-DO or similar. If this attempt is successful, then each test drive unit 18, 20 will transmit a TL 52 and possibly synchronize their respective SADBs. Additionally or alternately, the drive units may communicate with the centralized server 26 in order to use it as the offline processor. In response, the centralized server 26 will attempt to download any received TLs 52, SADB, raw data, and offline processing results to the other test drive units 18, 20.

FIG. 2 depicts a signal collection system (SCS) 50 contained in each of the test drive units 18, 20. As shown in Fig. 2, the SCS 50 contains a radio and data collection engine (DCE) module 56 with one or more receiver channels that receive, digitize, and otherwise process cellular or other signals of interest and subsequently pass the received signals' in-phase and quadrature samples to the signal processing and measurement unit 58. The latter does the essential signal processing and measurement operations, as described later.

The Data Communication and Synchronization module 62 connects with other SCSs 50 in other drive test units 18, 20 and exchanges essential information about the signals and sectors in the network. Alternately, the information will be cached at the centralized server 26 to be processed there or fetched by the other SCSs 50 of other test drive units 18, 20. These data will be used by the SCSs 50 to update their internal data stores containing sector and signal information. The SPMU 58 and the radio 56 benefit from these updates, which provide a priori information about signals.

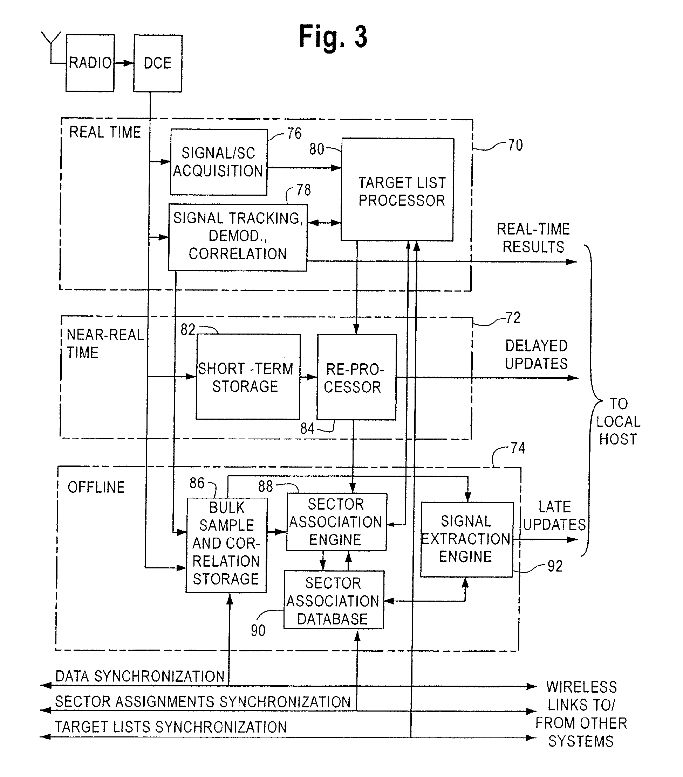

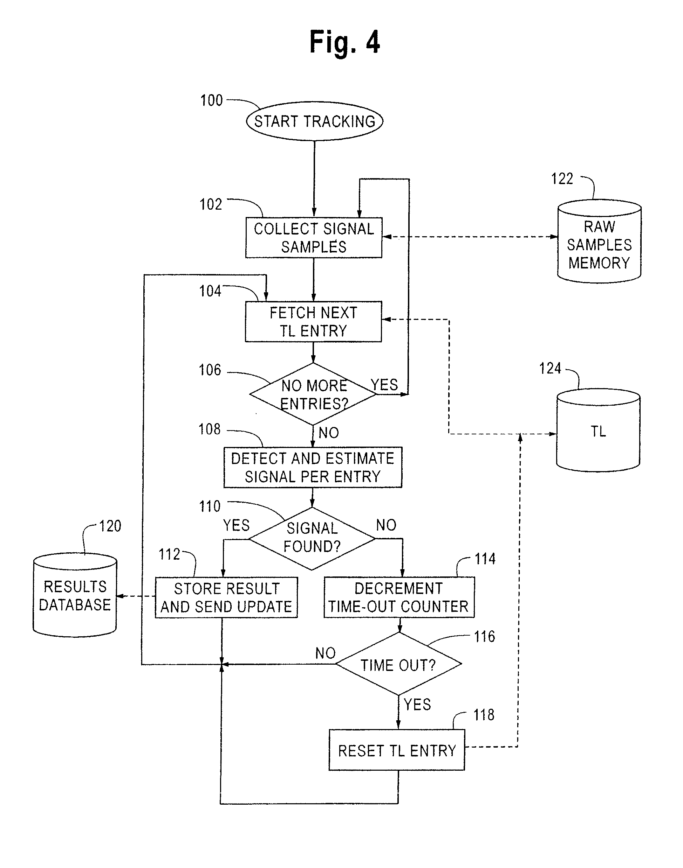

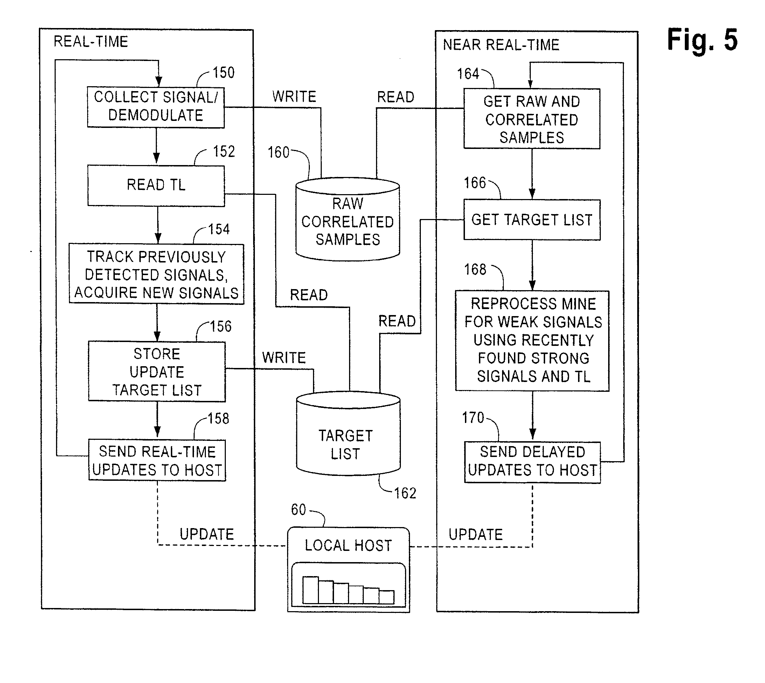

As discussed above, the SCS 50 operates in three modes, namely, the real-time mode (RT), the near-real time (NRT) mode and the offline mode. FIG. 3 shows a schematic of the three modes of operation occurring within the SPMU 58. FIG. 4 is a flow chart showing the tracking process of the real-time mode, and FIG. 5 illustrates the interaction between the RT and NRT modes of operation. In the real-time (RT) mode, a real-time processor 70 of the SCS 50 acquires and tracks the collected signals.

Signal acquisition is the process occurring within the signal acquisition processor 76 of finding new signals, i.e., emissions from specific sectors in the network with subsequent estimation of parameters, such as time-of-arrival and/or scrambling code, , and creation of corresponding entries in the target list 52. Signal acquisition does not rely on a priori knowledge of signal parameters; instead, a complete search in the full signal space is performed.

Signal tracking occurring within the signal tracking, demodulation, correlation processor 78 means measuring new signals that have been acquired and are currently described in the target list. In this way, signal tracking performs a search in a subspace of the full signal space, delimited by the stored estimated signal parameters. The advantage of this approach is faster signal detection and measurement. Signal tracking may cause deletion of an entry from the target list in cases when corresponding signals fall under a certain detection threshold and stay below it for a defined length of time.

The tracking process begins with a user of the test drive system 18, 20 activating the SCS 50 to begin tracking 100 signals. The DCE collects 102, and signal tracking processor 78 demodulates 150 signal samples. Next, signal tracking processor 78 fetches 104, 152 the TL entries one-at-a-time and processes raw signal samples attempting to detect, demodulate, and decode the signals described in the given TL entry. If the signal has not been found, the time-out counter is decremented, which may lead to the eventual deletion of the TL entry. If a signal is found 110, the result 112 is stored 112, 156 and sent to update the host computer; the time-out counter is reset. When the last TL entry has been retrieved 106, the tracking, demodulation, correlation processor 78 repeats this loop, processing a new set of signal samples.

In the real-time mode, the SCS 50 of the scanning receiver 56, 58 updates 158 the local host 60 with scan result messages (e.g., base station identifier, channel identifier, signal strength, etc.) in real-time. In addition, the SCS 50 stores raw sample data containing I and Q samples, any detected power levels and signal correlations to memory 82 to be used for further processing by the SCS 50 in near-real-time mode and offline mode. A more complete set of I and Q samples and detected data may be stored in a bulk storage module 86.

In the near-real-time mode, the near-real-time processor 72 of the processing unit 58 retrieves 164 I and Q samples and partially correlated results (if any). The near-real-time processor 72 also retrieves 166 the new entries in the target list 52 and reprocesses the I and Q samples and correlated results for each of the new entries to mine 168 for signals at lower signal levels than those that could be detected without prior knowledge of estimated signal parameters, i.e., in real-time mode. The SPMU 58 sends 170 the local host 60 delayed updates on the newly mined signals. The SPMU 58 operates in the real-time and near-real-time mode concurrently during the drive testing while the scanning receiver 56 is collecting RF data.

The SCS 50 operates in the offline mode when its scanning receiver is or is not collecting RF data, including when the drive is completed for the day. In this mode, the offline processor 74 will use I and Q samples and correlated results stored in bulk memory 86 with information collected by this and other SCSs 50. A sector association engine (processor) 88 may accept the detected signals from the real time processor 70 and the near-real-time processor 72 to its own results in order to create and update a sector associated database 90. In the process, the sector association engine uses statistical processing of multiple signal detections and decoding for associating specific subspaces of the total multi-dimensional space of signal parameters, with the specific sectors of the wireless network. In addition, the sector association engine may use the TL 52 entries in real time in order to add them as sector associations into the SADB. Concurrently or subsequently, a signal extraction engine (processor) 92 may use advanced signal processing techniques to mine for and extract information that identifies, and estimates parameters of, additional signals that could not be detected during the real time or near real time processes. The information of the sector associated database 90 may be forwarded to other drive test units 18, 20.

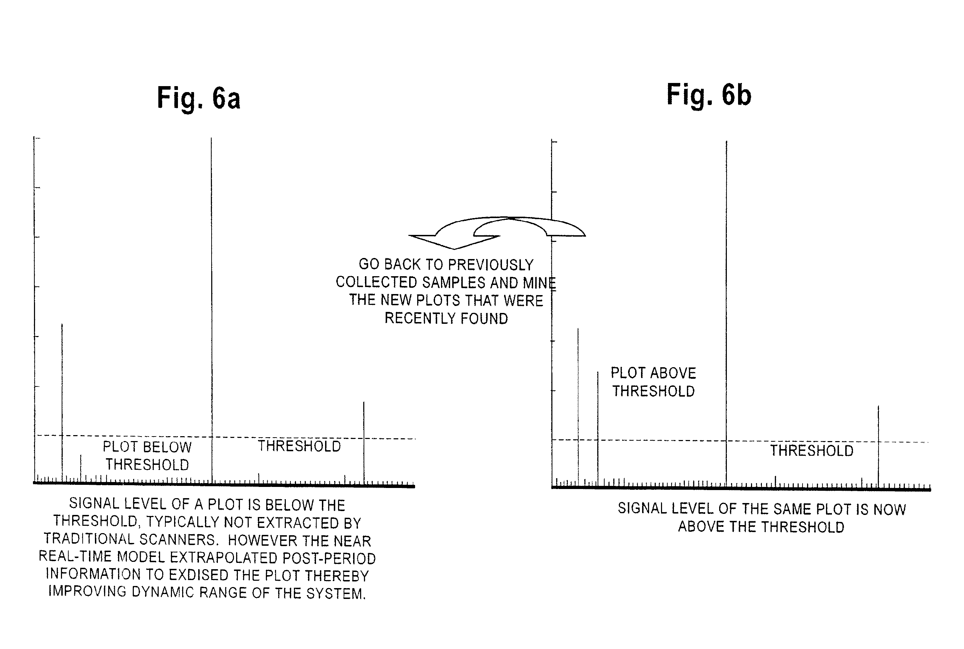

FIG. 6 shows two charts (a) and (b) that illustrate the reverse-time TL approach described above. FIG. 6(a) shows a set of signals (using the term "signal" to refer to any type of distinct signals in the channels, such as different pilots, scrambling codes, FCCH or SCH bursts, pn-codes, and the like) collected at a certain time and FIG. 6(b) shows the same set of signals collected at a later time. One of the signals falling below the digital decoding threshold in FIG. 6(a) happens to be above the same threshold in FIG. 6(b); assume that the first decoding occurred at the moment in time represented by FIG. 6(b) - obviously, the signal in question could not be detected in the RT mode at the time corresponding to FIG. 6(a). When the SCS is in the NRT mode, using the posterior information about the signal in FIG. 6(b), the signal in FIG. 6(a) can be detected (but not digitally decoded) and measured even though it is below the signal acquisition threshold.

In order to improve the overall control of the scanning process, a number of parameters may be shown on a display 64 to a user of a drive test unit 18, 20. The information displayed to the user may include current real-time signal measurement results as well as previously recorded and processed results by this and/or other signal-collection units 18, 20 as well as available a priori information about network properties and configuration.

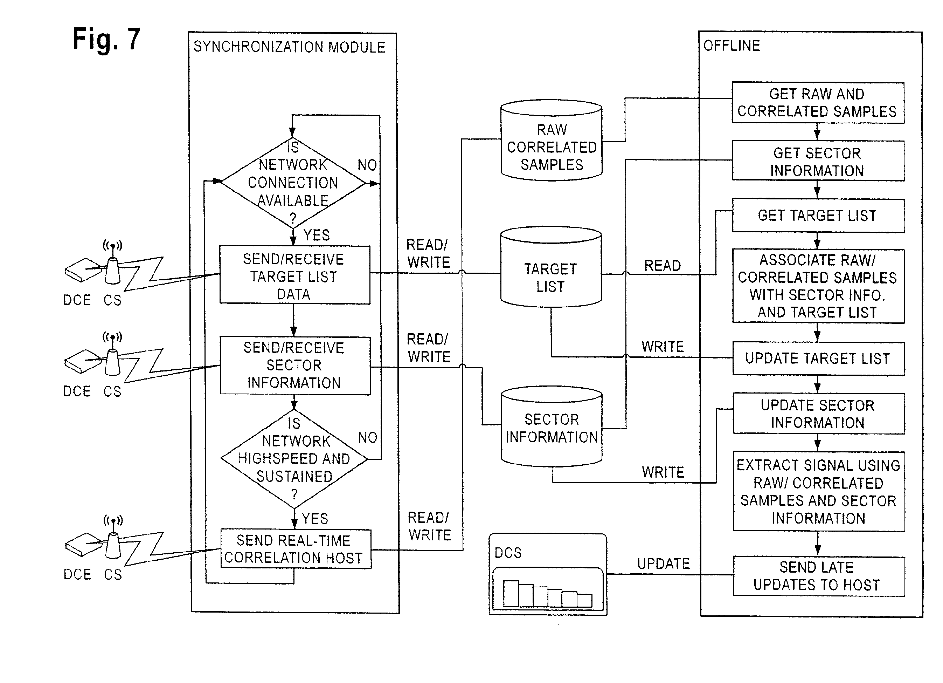

The exchange of information between the various SCSs 50 as well as with the CS 26 occurs through the SM 62. FIG. 7 is a flow diagram that illustrates information flow through the SM 62. In this regard, the SM 62 periodically checks for network connectivity (i.e., whether it can detect another test drive unit 18, 20 directly or alternately, a wireless network connection is available to communicate with other units or the CS 26). If connectivity exists, the SCS 50 establishes a connection to another SCS 50 (or the CS 26) and exchanges TL information. Next, if connectivity is sustained or connectivity can be reestablished, the SCS exchanges signal patterns from the sector association data base 90 with another SCS 50 (or CS 26). Both TL messages and sector association messages are relatively short messages capable of being exchanged via relatively narrowband public networks if a direct connection between SCSs 50 cannot be established. During message exchanges, the TL messages are prioritized over signal pattern messages as they directly impact the performance of the SCS in processing signals during the RT mode. If a direct broadband link between any two SCSs 50 exists and is sustainable (such as, e.g., when two or more test vehicles are parked close to each other during a lunch break or overnight), the SM 62 establishes an ad hoc peer-to-peer connection with another SCS 50 and exchanges or synchronizes all databases, including that of the collected raw signal samples. This allows the SCSs to distribute the offline-mode processing tasks between themselves and/or the CS 26 in order to process information in a parallel, distributed way, as explained further below.

When the SM 62 of a drive test unit 18, 20 detects the availability of sustained broadband connectivity (e.g., when two or more SCSs 50 are located inside the range of their wideband communication radios, such as WiFi), the drive test units 18, 20 will exchange complete drive data files, I and Q samples and correlation-with-patterns results. The data contained in these longer communications will be used in the offline processing mode of the SCSs 50. In this case, the SCSs 50 act as distributed signal analysis engines where each SCS 50 may process only a portion of the collected drive test information. In this way, the processing technology is streamlined and made more efficient, since there is no need for wideband connectivity to the central server 26 at the service provider's back office, and the processing capability of the collecting stations is not wasted when they would otherwise be sitting idle in the vehicles during an overnight stay-instead, they are post-processing the results of a day's worth of collected signal samples.

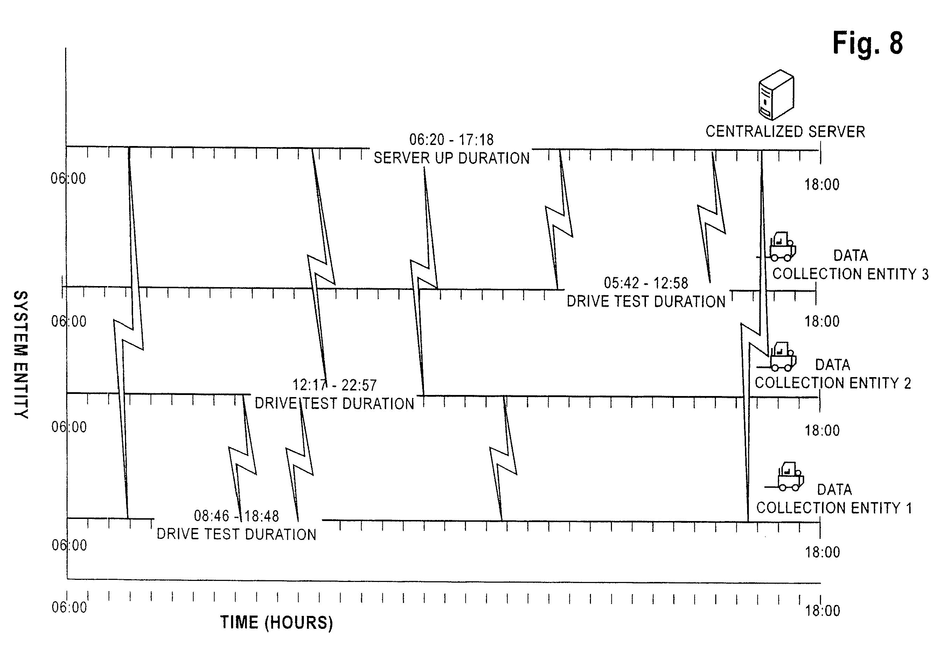

The SCSs 50 and, in some cases, the CS 26 form a virtual ad-hoc network. FIG. 8 shows the likely communication scenarios between the various entities of the system. Following is a partial listing of various communication scenarios. In a first scenario, the SCS 50 connects to the CS 26 at the start of the drive to retrieve the latest available sector information data stored at the CS (see DCEs 2 and 3). In another scenario, a SCS 50 connects to the CS 26 at the end of the drive and exchanges sector information (see DCEs 1 and 3). In still another scenario, an SCS 50 connects with another SCS 50 and exchanges complete drive data files, I and Q samples and signal correlations after completion of a drive (see DCEs 1 and 2). In still another scenario, SCS 50 connects with another SCS 50 being used in a concurrent drive and exchanges TLs and sector information (See DCEs 1 and 2).

In another embodiment, the information from the normally separate SADB 90 can be merged with the TL 52. The merged SADB and TL form a more complete TL (expanded TL) that may then be transferred among drive test units 18, 20.

A specific embodiment of method and apparatus for drive testing cellular base stations has been described for the purpose of illustrating the manner in which the invention is made and used. It should be understood that the implementation of other variations and modifications of the invention and its various aspects will be apparent to one skilled in the art, and that the invention is not limited by the specific embodiments described.

## Claims

1. A drive test system (11) for measuring wireless communication systems' signal coverage and interference properties with at least one portable signal collection unit (18, 20) comprising:
control circuitry (50) configured to implement a first process that processes signals in real time to identify and measure received signal samples, that stores the received signal samples as raw, unprocessed data, and that updates a target list (52) with new entries corresponding to identified and measured signals, and a second process that retrieves the stored signal samples, that retrieves the new entries in the target list, and that reprocesses the retrieved signal samples in near real time, using the new entries in the target list, to identify received signals that were not identified in real time by the first process;
wherein the control circuitry is configured to implement each of the first process and the second process while the portable signal collection unit is collecting and receiving signal samples.

2. The drive test system as in claim 1 further comprising circuitry configured to implement third, offline, processing of an unlimited set of wireless signals samples acquired at any time by a plurality of drive test units in updating the target list.

3. The drive test system as in claim 1 further comprising a plurality of portable signal collection units.

4. The drive test system as in claim 3 with the near real time process further comprising data received from another portable signal collection unit of the plurality of portable signal collection units.

5. The drive test system as in claim 1 wherein the control circuitry is configured to implement each of the first process and the second process while the portable signal collection unit is online.

6. A method of processing wireless signals collected from a plurality of cellular base stations by one or a plurality of drive test units of a drive test system, such method comprising:
a first process within at least one of the plurality of drive test units processing received wireless signal samples in real time to identify and measure signals from the plurality of cellular base stations, storing the received wireless signal samples as raw, unprocessed data, and updating a target list with new entries corresponding to identified and measured signals; and
a second process within the at least one drive test unit retrieving the stored wireless signal samples, retrieving the new entries in the target list, and reprocessing in near real time the wireless signal samples, using the new entries in the target list, to identify signals that were not identified in real time by the first process;
wherein each of the first process and the second process is executed while the at least one drive test unit is collecting and receiving signal samples.

7. The method of processing wireless signals as in claim 6 with the first process creating and processing the target list.

8. The method of processing wireless signals as in claim 6 wherein each of the first process and the second process is executed while the at least one drive test unit is online.

## Patentansprüche

1. Fahrbares Testsystem (11) zum Messen der Signalreichweite und Interferenzeigenschaften eines Mobilfunksystems mit mindestens einer mobilen Datensammeleinheit (18, 20), umfassend:
Steuerschaltung (50), die so konfiguriert ist, dass sie ein erstes Verfahren ausführt, das Signale in Echtzeit verarbeitet, so dass empfangene Signalabtastwerte identifiziert und gemessen werden, das die empfangenen Signalabtastwerte als rohe unverarbeitete Daten speichert, und das eine Zielliste (52) aktualisiert, wobei Neueinträge identifizierten und gemessenen Signalen entsprechen, und ein zweites Verfahren, das die gespeicherten Signalabtastwerte abruft, das die Neueinträge in der Zielliste abruft, und das die abgerufenen Signalabtastwerte in Beinahe-Echtzeit wieder verarbeitet, wobei die Neueinträge in der Zielliste verwendet werden, um die empfangenen Signale zu identifizieren, die nicht in Echtzeit durch das erste Verfahren identifiziert wurden
wobei die Steuerschaltung so konfiguriert ist, dass das erste und zweite Verfahren jeweils ausgeführt wird, während die mobile Signalsammeleinheit Signalabtastwerte sammelt und empfängt.

2. Fahrbares Testsystem nach Anspruch 1, zudem umfassend eine Schaltung, die so konfiguriert ist, dass eine dritte Offline-Verarbeitung eines unbegrenzten Satzes an Drahtlos-Signalabtastwerten ausgeführt wird, die zu einer beliebigen Zeit von einer Anzahl fahrbarer Testsystemeinheiten beim Aktualisieren der Zielliste erfasst werden.

3. Fahrbares Testsystem nach Anspruch 1, zudem umfassend eine Anzahl mobiler Signalsammeleinheiten.

4. Fahrbares Testsystem nach Anspruch 3, wobei das Beinahe-Echtzeitverfahren zudem Daten umfasst, die von einer anderen mobilen Signalsammeleinheit der Anzahl mobilen Signalsammeleinheiten empfangen werden.

5. Fahrbares Testsystem nach Anspruch 1, wobei die Steuerschaltung so konfiguriert ist, dass das erste und zweite Verfahren jeweils ausgeführt wird, während die mobile Signalsammeleinheit online ist.

6. Verfahren zum Verarbeiten von Drahtlos-Signalen, die von einer Anzahl Mobilfunk-Basisstationen durch eine oder eine Anzahl fahrbarer Testeinheiten eines fahrbaren Testsystems gesammelt werden, wobei dieses Verfahren umfasst:
ein erstes Verfahren in mindestens einer der Anzahl fahrbarer Testeinheiten, das die empfangenen Drahtlos-Signalabtastwerte in Echtzeit verarbeitet, so dass Signale von der Anzahl Mobilfunk-Basisstationen identifiziert und gemessen werden, die empfangenen Drahtlos-Signalabtastwerte als rohe unverarbeitete Daten speichert, und eine Zielliste mit Neueinträgen aktualisiert, die den identifizierten und gemessenen Signalen entsprechen; und
ein zweites Verfahren in der mindestens einen fahrbaren Testeinheit, das die gespeicherten Drahtlos-Signalabtastwerte abruft, die Neueinträge in der Zielliste abruft, und die Drahtlos-Signalabtastwerte in Beinahe-Echtzeit wieder verarbeitet, wobei die Neueinträge in der Zielliste verwendet werden, um die Signale zu identifizieren, die nicht in Echtzeit durch das erste Verfahren identifiziert wurden;
wobei das erste und zweite Verfahren jeweils ausgeführt wird, während die mindestens eine fahrbare Testeinheit Signalabtastwerte sammelt und empfängt.

7. Verfahren zum Verarbeiten von Drahtlossignalen nach Anspruch 6, wobei das erste Verfahren die Zielliste erzeugt und verarbeitet.

8. Verfahren zum Verarbeiten von Drahtlossignalen nach Anspruch 6, wobei das erste und zweite Verfahren jeweils ausgeführt wird, während die mindestens eine fahrbare Testeinheit online ist.

## Revendications

1. Système de test d'entraînement (11) pour mesurer une couverture de signaux de systèmes de communication sans fil et des propriétés d'interférence avec au moins une unité de collecte de signaux portable (18, 20) comprenant :
un circuit de commande (50) configuré pour la mise en oeuvre d'un premier processus qui traite les signaux en temps réel pour identifier et mesurer des échantillons de signaux reçus, qui stocke les échantillons de signaux reçus comme des données brutes non traitées, et qui met à jour une liste cible (52) avec de nouvelles entrées correspondant à des signaux identifiés et mesurés, et un deuxième processus qui extrait les échantillons de signaux stockés, qui extrait les nouvelles entrées dans la liste cible et qui traite à nouveau les échantillons de signaux extraits en temps presque réel, en utilisant les nouvelles entrées dans la liste cible pour identifier les signaux reçus qui n'ont pas été identifiés en temps réel par le premier processus ;
où le circuit de commande est configuré pour la mise en oeuvre de chacun du premier processus et du deuxième processus pendant que l'unité de collecte de signaux portable collecte et reçoit les échantillons de signaux.

2. Système de test d'entraînement selon la revendication 1, comprenant en outre un circuit configuré pour la mise en oeuvre d'un troisième traitement hors ligne d'un ensemble illimité d'échantillons de signaux sans fil acquis à n'importe quel moment par une pluralité d'unités de test d'entraînement en mettant à jour la liste cible.

3. Système de test d'entraînement selon la revendication 1, comprenant en outre une pluralité d'unités de collecte de signaux portables.

4. Système de test d'entraînement selon la revendication 3, le processus presque en temps réel comprenant en outre les données reçues d'une autre unité de collecte de signaux portable de la pluralité d'unités de collecte de signaux portables.

5. Système de test d'entraînement selon la revendication 1, dans lequel le circuit de commande est configuré pour la mise en oeuvre de chacun du premier processus et du deuxième processus pendant que l'unité de collecte de signaux portable est en ligne.

6. Procédé de traitement de signaux sans fil collectés d'une pluralité de stations de base cellulaires par une ou une pluralité d'unités de test d'entraînement d'un système de test d'entraînement, ledit procédé comprenant :
un premier processus dans au moins une de la pluralité d'unités de test d'entraînement traitant des échantillons de signaux sans fil reçus en temps réel pour identifier et mesurer des signaux de la pluralité de stations de base cellulaires, stockant les échantillons de signaux sans fil reçus comme des données brutes non traitées, et mettre à jour une liste cible avec de nouvelles entrées correspondant à des signaux identifiés et mesurés ; et
un deuxième processus dans au moins une unité de test d'entraînement qui extrait les échantillons de signaux sans fil stockés, en extrayant les nouvelles entrées dans la liste cible, et le retraitement en temps presque réel des échantillons de signaux sans fil, en utilisant les nouvelles entrées dans la liste cible pour identifier des signaux qui n'ont pas été identifiés en temps réel par le premier processus ;
où chacun du premier processus et du deuxième processus est exécuté pendant qu'au moins une unité de test d'entraînement collecte et reçoit des échantillons de signaux.

7. Procédé de traitement de signaux sans fil selon la revendication 6, avec le premier processus créant et traitant la liste cible.

8. Procédé de traitement de signaux sans fil selon la revendication 6, dans lequel chacun du premier processus et du deuxième processus est exécuté pendant qu'au moins une unité de test d'entraînement est en ligne.
